# EUROPÄISCHE PATENTANMELDUNG

(11) **EP 4 682 808 A1**
(43) Veröffentlichungstag der Anmeldung: **21.01.2026**
(21) Anmeldenummer: 24188504.5
(22) Anmeldetag: 15.07.2024
(51) Int. Cl.: G06Q 30/0601, G06Q 30/0241

(54) **COMPUTERIMPLEMENTIERTES VERFAHREN ZUR GENERIERUNG EINER VERKAUFSANZEIGE**

(71) Anmelder: Aulin GmbH, 40212 Düsseldorf (DE)
(72) Erfinder: Leistenschneider, Lukas, 40213 Düsseldorf (DE)
(74) Vertreter: Kluin Patent

(57) **Zusammenfassung**

Computerimplementiertes Verfahren (100) zur automatischen Herstellung einer Verkaufsanzeige für ein Produkt, mit den folgenden Schritten: elektronisches Abrufen (1) und Erfassen (2) zumindest von ein Produkt aus einer Liste von Produkten betreffenden Herstellerdaten, welche über eine online-Plattform von einem Hersteller des Produkts bereitgestellt werden; Generieren und/oder Anpassen (5) zumindest eines Anzeigentextes und Anordnen von elektronischen Bildern und/oder Fotos durch Analyse der erfassten Produktdaten und/oder Produktbilder mittels eines maschinellen Lernmodells unter Verwenden der abgerufenen Herstellerdaten und insbesondere in Abhängigkeit einer vordefinierten Anordnung von Informations- und Eigenschaftsfeldern zu einer Produktverkaufsanzeige.

## Beschreibung

Die Erfindung betrifft ein computerimplementiertes Verfahren zur automatischen Herstellung einer Produktverkaufsanzeige, insbesondere einer digitalen Verkaufsannonce eines Online-Shops.

Derartige Verkaufsanzeigen für Produkte oder Artikel, welche in einem Online-Shop erworben werden können, sind hinlänglich bekannt. Sie umfassen in der Regel nicht nur Namen, Bezeichnung und Abbildungen des jeweils zu verkaufenden Artikels, sondern regelmäßig auch technische Angaben, wie Abmaße, Funktionsumfang und Energieverbrauch, sowie eine ausführliche Produktbeschreibung und teilweise auch Kaufempfehlungen von anderen Käufern.

Um eine solche Verkaufsanzeige zu erstellen, bedarf es daher eines vorherigen Zusammentragens bzw. Sammeln von Informationen zum jeweiligen Artikel sowie anschließend einer Erstellung einer Präsentation dieser Informationen in einer für potenzielle Käufer ansprechenden Weise. Dieses Zusammentragen von Informationen erfolgt regelmäßig von gänzlich unterschiedlichen Quellen. So werden beispielsweise Informationen zu den technischen Angaben des Artikels üblicherweise vom jeweiligen Produkthersteller, die Abbildungen von Werbeagenturen und Kaufempfehlungen von Marktforschungsinstituten bezogen. Anschließend werden diese Informationen manuell durch einen Bearbeiter zusammengefasst und in ein üblicherweise immer gleiches Anzeigen-Format, mit Text, Bildern und weiteren Informationen gebracht. Hierbei muss immerwährend ein Abgleich zwischen den einzelnen Informationen zu dem jeweiligen Artikel erfolgen, wie beispielsweise zwischen der Artikelbeschreibung im Anzeigentext und der jeweiligen Artikelnummer, Farbe und Eigenschaft des Artikels, um in der zu erstellenden Verkaufsanzeige Fehlverknüpfungen zu vermeiden, wie beispielsweise Fehlverknüpfungen zwischen Text und dem in einer Abbildung dargestellten Artikel, beispielsweise die Farbe des Artikel betreffend.

Sowohl das Zusammentragen der Produktinformationen als auch das Erstellen der Verkaufsanzeige, als auch der immerwährende Abgleich der Informationen ist sowohl in technischer Hinsicht als auch in wirtschaftlicher Hinsicht ein bedeutender Faktor im gesamten Verkaufsprozess eines Artikels. So ist einerseits das manuelle Zusammensuchen und Bereitstellen der jeweiligen Produktinformationen sowie das anschließende Aufbereiten dieser Informationen zu einem gewünschten Anzeigenformat technisch relativ aufwändig und komplex. Zwar können bei dem zuletzt genannten Schritt regelmäßig Formatvorlagen unterstützend wirken, jedoch ist die Erstellung des Anzeigentextes, die Auswahl und Anordnung der Bilder und Grafiken regelmäßig durch eine Person manuell zu erledigen. Die Suche nach den aktuellsten Informationen zum jeweiligen Produkt, insbesondere auch solche, welche auf individuellen Webseiten von Dritten, wie Verbrauchern und Privatpersonen erfolgen, erfordert jedoch ebenfalls regelmäßig eine Bearbeitung durch eine Person. In diesem Zusammenhang spielt auch die Relevanz der Sichtbarkeit auf Suchmaschinen, wie Google, Bing, usw., welche durch Individualität und Qualität der Produktverkaufsanzeige beeinflusst werden, eine immer bedeutendere Rolle in der manuellen Auffindbarkeit. All dies ist jedoch relativ arbeitsaufwändig und somit zeit- und kostenintensiv.

Insbesondere bei Online-Shops, in denen eine Vielzahl von Produkten unterschiedlicher Hersteller, in einer Vielzahl von Varianten, angeboten werden, ist der Bearbeitungsaufwand solcher Verkaufsanzeigen somit teilweise sehr hoch. Dies wurde in den letzten Jahren durch die rasant wachsende Nachfrage nach Online-Kaufmöglichkeiten nochmals deutlich verstärkt. Neben der Anzahl der Artikel ist auch durch die Vielzahl der Vertriebsmöglichkeiten, welche alle verschiedene Ansprüche an die Verkaufsanzeige haben, wie beispielsweise an Qualität, Anordnung der Informationen, Format usw., regelmäßig ein relativ hoher Aufwand erforderlich. Ferner ist aufgrund der Globalisierung die Erstellung von Anzeigen in verschiedenen Sprachen eine besondere Herausforderung für Unternehmen.

Als Folge hieraus sind heutige im Internet verfügbare Verkaufsanzeigen von unterschiedlichen Verkäufern regelmäßig nahezu gleich aufgebaut, weisen den gleichen Text und Bilder auf und sind entsprechend wenig individuell ansprechend gestaltet. Nicht selten werden hierbei auch Fehler in einer initialen Verkaufsanzeige, insbesondere Fehlverknüpfungen, wie Farbangaben, regelmäßig an sämtliche nachfolgenden Verkaufsanzeigen mit übertragen. Solche Fehler müssen nicht zwingend das Produkt selbst betreffen, sondern können sich allen aus der Ausgestaltung der Produktanzeige ergeben, wie beispielsweise eine Diskrepanz in der Farbangabe im Beschreibungstext und ein dazugehörenden Produktabbildung, wie es nicht selten beim Anbieten eines Produkts vorkommt, welches in mehreren unterschiedlichen Farben verfügbar ist. Als Folge hieraus können sich Fehlaufträge ergeben, welche das Verpacken und Versenden von falschen Artikeln zur Folge haben können. Es ist daher aktuell stets eine manuelle Überwachung und Kontrolle der Verkaufsanzeigen sowie Bestellungen durch eine menschliche Person erforderlich. Dies ist jedoch ebenfalls zeit- und kostenintensiv.

Aufgabe der vorliegenden Erfindung ist es daher, ein computerimplementiertes Verfahren bereitzustellen, das zumindest einen der oben genannten Nachteile verbessert und insbesondere eine Herstellung einer mit korrekt zusammengestellten Produktangaben versehenen Verkaufsanzeige zeit- und kostengünstig ermöglicht.

Die Erfindung löst die gestellte Aufgabe durch ein Verfahren mit den Merkmalen des Hauptanspruchs, durch eine Vorrichtung zur Datenverarbeitung mit den Merkmalen des Anspruchs 14 sowie durch ein Computerprogrammprodukt mit den Merkmalen des Anspruchs 15. Vorteilhafte Ausgestaltungen und Weiterbildungen der Erfindung sind in den Unteransprüchen, der Beschreibung sowie den Figuren offenbart.

Das erfindungsgemäße computerimplementierte Verfahren zur automatischen Herstellung einer Verkaufsanzeige für ein Produkt sieht vor, dass ein elektronisches Abrufen und Erfassen zumindest von ein Produkt aus einer Liste von Produkten betreffenden Herstellerdaten, welche über eine online-Plattform von dem Hersteller des Produkts bereitgestellt werden, und anschließend ein Generieren zumindest eines Anzeigentextes und Anordnen von elektronischen Bildern und/oder Fotos durch Analyse der erfassten Produktdaten und/oder Produktbilder mittels eines maschinellen Lernmodells (künstliche Intelligenz anwendenden Programms) unter Verwenden der abgerufenen Herstellerdaten und in Abhängigkeit einer vordefinierten Anordnung von Informations- und Eigenschaftsfeldern zu einer Produktverkaufsanzeige erfolgt. Dadurch ist ermöglicht, dass von einem Hersteller offenbarte Informationen - beispielweise zu einem neuen Produkt - besonders schnell abgerufen, erfasst und als Verkaufsanzeige in einen Vertriebsshop implementiert und zum Verkauf angeboten werden können. Hierbei können nicht nur Produktanzeigen in großer Anzahl in besonders schneller Art und Weise erstellt werden, sondern auch Fehler in der Zuordnung der Informationen und Daten, wie beispielsweise Unterschiede der Farbangabe im Text und in den Abbildungen, besonders effektiv vermieden werden.

Es sollte deutlich sein, dass unter einer automatischen Herstellung insbesondere eine teil- oder vollautomatische Abarbeitung der Verfahrensschritte mittels eines Computers erfolgt. Insbesondere kann das Abrufen und Erfassen der Herstellerdaten vollautomatisch erfolgen, insbesondere durch eine regelmäßige Überwachung der entsprechenden Webseiten des Herstellers oder durch ein anderes Benachrichtigungssystem, bei dem beispielsweise ein Einstellen eines neues Artikels von einem jeweiligen Hersteller detektiert wird, und anschließend die Herstellerdaten dieses Artikels abgerufen und erfasst werden.

Unter dem Begriff Abrufen kann entsprechend verstanden werden, dass die Herstellerdaten von der Webseite des Herstellers kopiert werden und anschließend bevorzugt in dem das Verfahren durchführenden Computer gespeichert werden. Das Abrufen der Herstellerdaten kann beispielsweise über das sogenannte "crawling" erfolgen. Unter dem Begriff Erfassen kann entsprechend verstanden werden, dass die Herstellerdaten nach bestimmten Kriterien eingruppiert und/oder zugeordnet werden, beispielsweise die äußeren Abmaße des Artikels oder die jeweilige Farbe. Die Herstellerdaten bzw. Produktinformationen können beispielsweise von CSV-Dateien, B2B-Onlineshops oder PIM-Systemen übergeben werden. Es sollte deutlich sein, dass unter dem Begriff Herstellerdaten nicht nur zwingend die von einem Hersteller zu dem jeweiligen Produkt bereitgestellten Daten zu verstehen sind, sondern jegliche Daten, welche das in Rede stehende Produkt betreffen, insbesondere auch Daten von Dritten.

Das Generieren umfasst insbesondere ein Erstellen eines Anzeigetextes, mit einer Überschrift, welche den Namen des Produkts umfasst, einem Beschreibungstext, einer Angabe von weiteren Daten, insbesondere technische Daten, einer Anordnung von Abbildungen, Fotos und/oder anderen visuellen Darstellungen des Produkts sowie einer produktspezifischen Anwendungsempfehlung. Hierbei können insbesondere folgende Parameter von dem Lernmodell beachtet werden: Titel, Beschreibung, technische Daten (Tabellenform), Kurzbeschreibung, Lieferumfang, sogenannte Meta-Titel, sogenannte Meta-Beschreibung und/oder sogenannte Key-Words. Zusätzlich zu den Textfeldern werden Produktbilder und Videos eingepflegt. Dieser Prozess kann insbesondere folgende Parameter beinhalten: Erstellen, Herunterladen, Zuschneiden, Betiteln, Hochladen und/oder Verlinkungen hinzufügen. Des Weiteren können hinsichtlich des Produkts folgende Punkte für eine bessere Sichtbarkeit in Suchmaschinen und im eigenen Webshop eingepflegt werden: Kategorien, Eigenschaften, (Pseudo)varianten, sogenanntes Cross-Selling und/oder sogenannte SEO URLs. So können beispielsweise die Textfelder im Online-Shopsystem mit strukturierten, mittels des Lernmodells generierten und SEO-optimierten Daten befüllt werden. Die Produktbilder können im vorgegebenen Format zugeschnitten, SEO-konform benannt und gespeichert werden. Videos können SEO-konform benannt und eingebunden werden. (Pseudo)varianten können anhand von gleichen Merkmalen automatisch eingefügt werden. Kategorien und Eigenschaften können in einer Stapelverarbeitung manuell hinzugefügt werden. Hierzu können API-Schnittstellen zum ERP-System und zum Online-Shopsystem des Kunden arbeiten.

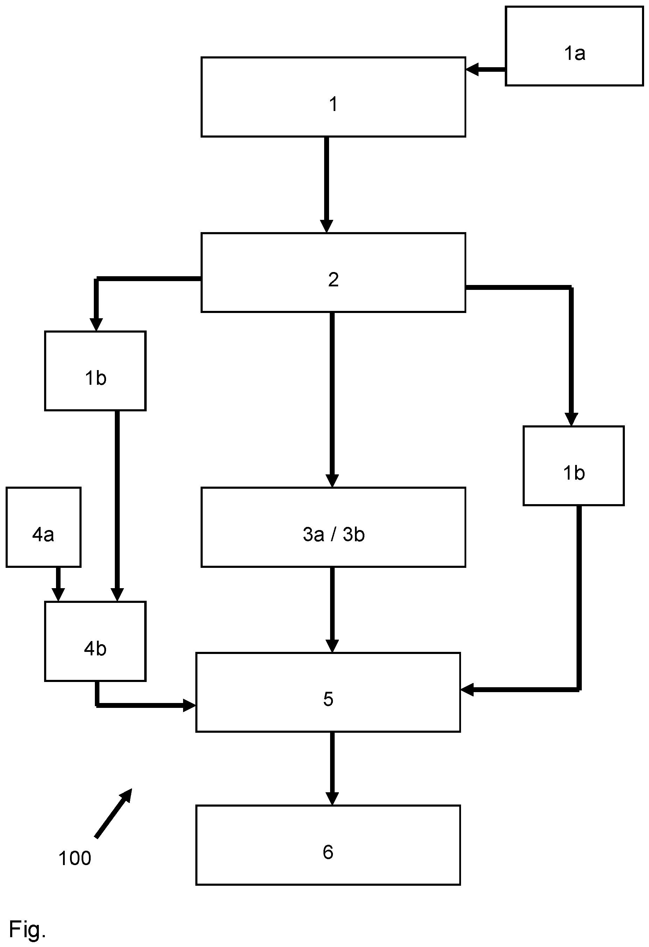

Das Generieren erfolgt bevorzugt teil- oder vollautomatisch, insbesondere ausschließlich durch eine Analyse der erfassten Produktdaten und/oder Produktbilder, welche zuvor abgerufen und erfasst wurden. Dadurch kann das Generieren der kompletten Verkaufsanzeige beispielsweise anhand einer einzigen Abbildung des Produkts, wie beispielsweise ein Foto, erfolgen. Zum Generieren sind daher nur sehr wenige Informationen über das Produkt erforderlich. Die Analyse erfolgt mittels eines maschinellen Lernmodells, insbesondere unter Anwendung sogenannter künstlicher Intelligenz. Hierbei werden die erfassten Daten insbesondere vollautomatisch in einen sinnvollen Kontext gebracht und auf eine passende Zugehörigkeit, wie Farbangabe im Text sowie auf den Bildern, geprüft. Es kann hierbei vorgesehen sein, dass dem Programm zur Anwendung der künstlichen Intelligenz zur Erstellung der Produktanzeige zuvor vorgegeben wird, in welchem Format die Produktanzeige erstellt werden soll. Insbesondere können die Anzahl und Anordnung von Informations- und Eigenschaftsfeldern der Produktverkaufsanzeige vordefiniert sein. Beispielsweise kann im oberen Bereich der Produktverkaufsanzeige eine Abbildung mit Titel vorgesehen sein, darunter eine Beschreibung sowie weitere Angaben zum Produkt. Insgesamt betrachtet ermöglicht diese Art des Erstellens einer Produktverkaufsanzeige eine vergleichsweise sehr hohe Qualität des Ergebnisses.

In einer bevorzugten Ausgestaltung des erfindungsgemäßen Verfahrens kann es vorgesehen sein, dass nach dem Abrufen und Erfassen der Herstellerdaten ein Identifizieren von zusammengehörenden Produktdaten und Produktinformationen eines gleichen Produkts durch Analyse der erfassten Produktdaten mittels des maschinellen Lernmodells erfolgt. Das Identifizieren von zusammengehörenden Produktdaten kann insbesondere durch einen Abgleich der erfassten Produktdaten und -abbildungen miteinander und/oder mit weiteren teil- oder vollautomatisch abrufbaren Informationen, insbesondere über das Internet, erfolgen. Nach dem Identifizieren kann zusätzlich ein Zuordnen und Zusammenstellen der zusammengehörenden Produktdaten und Produktinformationen eines gleichen Produkts erfolgen. Dadurch können fehlerhafte Produktanzeigen effektiv vermieden werden.

In einer weiteren bevorzugten Ausgestaltung des erfindungsgemäßen Verfahrens kann es vorgesehen sein, dass das elektronische Abrufen und Erfassen von Herstellerdaten mittels des maschinellen Lernmodells voll- oder teilautomatisch erfolgt, insbesondere in einem regelmäßigen Intervall, insbesondere in einem Intervall welches durch Analyse von vergangenen Zeitpunkten für Produktneuerungen mittels des maschinellen Lernmodells generiert ist. Dadurch können Angaben durch den Hersteller schnellstmöglich erfasst werden, insbesondere ohne dass es dazu einer manuellen Überwachung bedarf.

In einer weiteren bevorzugten Ausgestaltung des erfindungsgemäßen Verfahrens kann es vorgesehen sein, dass bei dem elektronischen Abrufen und Erfassen von Herstellerdaten zusätzlich auch Veränderungen oder Neueinstellungen von Herstellerdaten durch Analyse der zur Verfügung gestellten Produktinformationen erfasst werden. Dadurch können Änderungen in den von einem Hersteller bisher angegebenen Produktdaten und/oder von einem Hersteller neu eingestellte Produktdaten schnellstmöglich erfasst werden, insbesondere ohne dass es dazu einer manuellen Überwachung bedarf.

Die Herstellerdaten können insbesondere technische Informationen, einen Beschreibungstext, Zeichnungen, Fotos und/oder sonstige Angaben zu dem jeweiligen Produkt umfassen. Dadurch können breit gefächerte Informationen zu einem einzelnen Produkt besonders schnell und effektiv zusammengetragen und genutzt werden.

Es kann vorgesehen sein, dass das Generieren oder ein Anpassen der Produktverkaufsanzeige, insbesondere des Anzeigentextes und Anordnen von elektronischen Bildern und/oder Fotos, mit oder zeitlich nach einem Anwählen der betreffenden, die Produktverkaufsanzeige enthaltenden Online-Webseite erfolgt. Dies kann insbesondere durch ein Analysieren mittels des maschinellen Lernmodells erfolgen. Unter dem Begriff Anwählen ist vorliegend der Vorgang eines Aufrufens einer bestimmten Webseite, insbesondere der die Produktanzeige umfassenden Webseite, zu verstehen. Hierbei wird zeitlich mit oder unmittelbar nach dem Aufrufen der die Produktanzeige umfassenden Webseite, diese Webseite bzw. die darin aufgerufene Produktanzeige erst erstellt. Dies kann in wenigen Millisekunden erfolgen, so dass der Nutzer, welcher die Webseite aufgerufen hat, hiervon nicht zwingend etwas mitbekommt. Der Vorteil hierbei liegt darin, dass die Produktanzeige in Abhängigkeit von äußeren Umständen beim Anwählen der Produktverkaufsanzeige individuell erstellt und anschließend angezeigt werden kann. Beispielsweise können Umstände oder Faktoren, wie Spracheinstellungen, ein Ländercode des die Webseite aufrufenden Nutzers oder die jeweilige Uhrzeit, genutzt werden, um die Produktverkaufsanzeige individuell zu gestalten.

Darüber hinaus kann es vorgesehen sein, dass zusätzlich das elektronische Abrufen der Herstellerdaten des Produkts zeitlich mit oder nach dem Anwählen der betreffenden, die Produktverkaufsanzeige enthaltenden Online-Webseite erfolgt. Hierbei kann entsprechend nicht nur die Produktverkaufsanzeige, sondern auch das Abfragen der Hersteller-Webseiten zum Abrufen von Produktdaten erst dann erfolgen, wenn ein Nutzer die Webseite der Verkaufsanzeige aufgerufen hat. Dadurch können dem Nutzer besonders aktuelle Informationen über das jeweilige Produkt zur Verfügung gestellt werden. Beispielweise können neuste Änderungen an dem Produkt durch ein Abrufen und Aktualisieren der Produktdaten in der aufgerufenen und noch zu erstellenden Verkaufsanzeige beinhaltet sein. Nach dem Abrufen der Produktdaten kann das Generieren und anschließend das Anzeigen der Produktverkaufsanzeige erfolgen. Dies kann in wenigen Millisekunden erfolgen, so dass der Nutzer, welcher die Webseite aufgerufen hat, hiervon nicht zwingend etwas mitbekommt.

Vorzugsweis ist es vorgesehen, dass das Generieren oder ein Anpassen der Produktverkaufsanzeige, insbesondere des Anzeigentextes und Anordnen von elektronischen Bildern und/oder Fotos, in Abhängigkeit von individuellen, insbesondere persönlichen Einstellungen und Präferenzen des die Produktverkaufsanzeige aufrufenden Benutzers (Users bzw. der Hostadresse) erfolgt. Dies kann insbesondere durch ein Analysieren mittels des maschinellen Lernmodells erfolgen. Auch hierbei kann das Generieren oder ein Anpassen der Produktverkaufsanzeige zeitlich mit oder nach dem Anwählen der betreffenden, die Produktverkaufsanzeige enthaltenden Online-Webseite erfolgen. Dies kann wiederum in wenigen Millisekunden erfolgen, so dass der Nutzer, welcher die Webseite aufgerufen hat, hiervon nicht zwingend etwas mitbekommt. Der Vorteil hierbei liegt darin, dass die Produktanzeige in Abhängigkeit von anderen, den Nutzer betreffenden Angaben, welche zuvor gesammelt worden sein können, individuell und auf den jeweiligen Nutzer angepasst erstellt und anschließend angezeigt werden kann. So können beispielsweise bei einer zuvor als weibliche Person erfasste Nutzerin, die Produkte einer bestimmten Farbauswahl im Vordergrund stehen, während bei einem zuvor als männliche Person erfassten Nutzer, die Produkte einer bestimmten anderen Farbauswahl im Vordergrund stehen. Die gesamte Produktanzeige kann so auf die jeweilige Person, welche die Produktanzeige angewählt bzw. aufgerufen hat, individuell abgestimmt sein. Grundsätzlich kann das Erfassen der individuellen Nutzerdaten durch ein anderes, bekanntes Softwareprogramm separat erfolgen.

Bevorzugt ist das die vorliegende Erfindung ausführende Softwareprogramm zusätzlich auch dazu geeignet, die individuellen, insbesondere persönlichen Einstellungen und Präferenzen des die Produktverkaufsanzeige aufrufenden Benutzers zuvor zu sammeln und zum Zwecke der Individualisierung der Produktverkaufsanzeige zu speichern.

Es kann somit vorgesehen sein, dass die persönlichen Einstellungen und Präferenzen des Benutzers anhand von zuvor von dem Benutzer besuchten Webseiten erfassbar ist, und zumindest das vermutete Geschlecht, das vermutete Alter und/oder eine vom Benutzer vermutlich präferierte Farbe umfasst.

Dies kann insbesondere durch ein Analysieren mittels des maschinellen Lernmodells erfolgen. Dadurch kann die Produktverkaufsanzeige in besonders effizienter Weise auf den jeweiligen Nutzer abgestimmt sein.

Das elektronische Abrufen von ein Produkt aus einer Liste von Produkten betreffenden Herstellerdaten kann - wie oben bereits angedeutet - automatisch, insbesondere regelmäßig, erfolgen. Dies ermöglicht es, eine stets aktuelle Produktverkaufsanzeige abrufbar zu machen. Ferner kann das Abrufen in Abhängigkeit von vordefinierten Umständen erfolgen. Beispielsweise kann das Abrufen immer dann erfolgen, wenn festgestellt wird, dass neue Daten vorhanden sind. Alternativ kann das Abrufen immer dann erfolgen, wenn festgestellt wird, dass wenig Datenverkehr, sogenannter "Traffic" auf den Webseiten des Herstellers vorliegt. Dadurch kann insbesondere die Zeit zum Abrufen der Herstellerdaten deutlich reduziert werden. Dies kann insbesondere durch ein Analysieren mittels des maschinellen Lernmodells erfolgen.

Das elektronische Abrufen der Herstellerdaten kann auch in Abhängigkeit mindestens einer Webseite eines Drittanbieters erfolgen, insbesondere wenn dasselbe Produkt bei der Webseite eines Drittanbieters abrufbar ist und dies von dem maschinellen Lernmodell, insbesondere der künstlichen Intelligenz, erkannt wird. Hierdurch können dezentrale Informationsabfragen erfolgen, so dass insbesondere Ressourcen, insbesondere den Datentransfer betreffend, eingespart werden können. So kann beispielsweise der Datenverkehr oder "Traffic" auf einer Hersteller-Webseite verringert werden, indem Produktdaten nicht unmittelbar vom Hersteller abgerufen werden, sondern alternativ von Drittanbietern desselben Produkts.

In einer weiteren bevorzugten Ausgestaltung des erfindungsgemäßen Verfahrens kann es vorgesehen sein, dass vor dem Generieren der Produktverkaufsanzeige ein Erfassen von Produkteigenschaften anhand von Zeichnungen, Abbildungen und/oder Fotos des Produkts erfolgt, insbesondere ein Erfassen mindestens einer Farbe des Produktes, und die erfasste Information für ein Zuordnen in ein vordefiniertes Informations- oder Eigenschaftsfeld zumindest zwischengespeichert wird. Dieser Zwischenschritt ermöglicht eine besonders effektive Fehlervermeidung, indem nicht nur auf die von einem Hersteller zur Verfügung gestellten Angaben und Daten vertraut wird, sondern eine automatische Überprüfung dieser Daten anhand der abgerufenen und erfassten Produkteigenschaften an sich erfolgt. Diese Überprüfung kann beispielsweise ein Analysieren einer Farbe des auf einem Bild dargestellten Produkts mittels des maschinellen Lernmodells sein. Grundsätzlich kann jedoch auch eine nicht-automatische - insbesondere durch einen Menschen erfolgende - Qualitätskontrolle vorgesehen sein.

Schließlich erfolgt eine Ausgabe einer fertig erstellten Produktverkaufsanzeige. Dies kann manuell durch eine Person oder ebenfalls automatisch in einem Webshop online gestellt werden.

Erfindungsgemäß ist eine Vorrichtung zur Datenverarbeitung, insbesondere eine Rechenanlage, umfassend Mittel zur Ausführung des Verfahrens mit den Merkmalen nach einem der Ansprüche 1 bis 13 vorgesehen. Diese Rechenanlage kann beispielsweise ein Computer sein.

Erfindungsgemäß ist ein Computerprogrammprodukt, umfassend Befehle, die bei der Ausführung des Programms durch einen Computer diesen veranlassen, das Verfahren nach einem der Ansprüche 1 bis 13 auszuführen. Das Computerprogrammprodukt kann insbesondere ein Speichermedium sein, auf welchem die entsprechende Software enthalten ist, welche voranstehende Befehle umfasst. Nachfolgend wird ein Ausführungsbeispiel der Erfindung anhand der einzigen Figur näher erläutert. Es zeigt rein schematisch:
Figur - ein Ablaufschema eines erfindungsgemäßen computerimplementierten Verfahrens zur automatischen Herstellung einer Verkaufsanzeige für ein Produkt.

Wie in der Figur dargestellt, erfolgt in einem ersten Schritt des computerimplementierten Verfahrens 100 ein elektronisches Abrufen 1 von ein Produkt aus einer Liste von Produkten betreffenden Herstellerdaten von einer Online-Plattform des Herstellers des Produkts oder von einer Webseite eines Drittanbieters, auf welcher dasselbe Produkt abrufbar ist. Dies erfolgt durch Analyse der erfassten Produktdaten mittels des maschinellen Lernmodells. Die Herstellerdaten können beispielsweise technische Informationen, einen Beschreibungstext, Zeichnungen und/oder Fotos des Produkts umfassen.

In einer besonderen Ausgestaltung der Erfindung erfolgt das elektronische Abrufen der Herstellerdaten zeitlich mit oder nach dem Anwählen bzw. Abrufen der betreffenden, die Produktverkaufsanzeige enthaltenden Online-Webseite. Das Detektieren eines Anwählens kann durch Analyse der Nutzung mittels des maschinellen Lernmodells erfolgen. Dies ist mit dem Bezugszeichen 1a dargestellt.

Nach dem Abrufen 1 erfolgt ein Erfassen 2 der abgerufenen Herstellerdaten zum Zwecke der Kontrolle und Weiterverarbeitung zum Erstellen der Produktverkaufsanzeige. Das Abrufen 1 und Erfassen 2 von Herstellerdaten erfolgt mittels eines maschinellen Lernmodells voll- oder teilautomatisch. Hierbei werden Neu-Veröffentlichungen von Herstellerdaten und Änderungen an bereits veröffentlichten Herstellerdaten durch Analyse der zur Verfügung gestellten Produktinformationen berücksichtigt.

In einem weiteren Schritt erfolgt ein Identifizieren 3a von zusammengehörenden Produktdaten und Produktinformationen eines gleichen Produkts durch Analyse der erfassten Produktdaten mittels des maschinellen Lernmodells.

In einem möglichen weiteren Schritt erfolgt ein Erfassen 3b von Produkteigenschaften anhand von Zeichnungen, Abbildungen und/oder Fotos des Produkts, insbesondere ein Erfassen mindestens einer Farbe des Produktes. Dies erfolgt durch Analyse der erfassten Produktdaten mittels des maschinellen Lernmodells

In einem weiteren Schritt erfolgt ein Generieren und/oder Anpassen 5 zumindest eines Anzeigentextes und Anordnen von elektronischen Bildern und/oder Fotos durch Analyse der erfassten Produktdaten und/oder Produktbilder mittels des maschinellen Lernmodells unter Verwenden der abgerufenen und erfassten Herstellerdaten und in Abhängigkeit einer vordefinierten Anordnung von Informations- und Eigenschaftsfeldern zu einer Produktverkaufsanzeige.

Das Generieren und/oder Anpassen 5 der Produktverkaufsanzeige kann mit oder zeitlich nach einem Anwählen 1b der betreffenden, die Produktverkaufsanzeige enthaltenden Online-Webseite erfolgt. Das Detektieren eines Anwählens kann durch Analyse der Nutzung mittels des maschinellen Lernmodells erfolgen.

Hierbei kann das Generieren und/oder Anpassen 5 der Produktverkaufsanzeige in Abhängigkeit von individuellen, insbesondere persönlichen Einstellungen und Präferenzen des die Produktverkaufsanzeige aufrufenden Benutzers erfolgen, welche mit dem Bezugszeichen 4b dargestellt ist. Dies kann durch Analyse der Nutzung mittels des maschinellen Lernmodells erfolgen.

Die individuellen, insbesondere persönlichen Einstellungen und Präferenzen des die Produktverkaufsanzeige aufrufenden Benutzers können zuvor gesammelt und gespeichert worden sein, welches mit dem Bezugszeichen 4a dargestellt ist. Die persönlichen Einstellungen und Präferenzen des Benutzers können beispielsweise anhand von zuvor von dem Benutzer besuchten Webseiten erfasst sein, und zumindest das vermutete Geschlecht, das vermutete Alter und/oder eine vom Benutzer vermutlich präferierte Farbe umfassen.

Letztlich erfolgt ein Ausgeben 6 der fertig erstellten Produktverkaufsanzeige, welche manuell durch eine Person oder ebenfalls automatisch in dem Webshop online gestellt werden kann.

### Bezugszeichenliste:

- 1a: Anwählen
- 1b: Anwählen
- 1: Abrufen
- 2: Erfassen
- 3a: Identifizieren Produktinformationen
- 3b: Erfassen Produkteigenschaften
- 4a: Sammeln Benutzerdaten
- 4b: Anpassen
- 5: Generieren und/oder Anpassen
- 6: Ausgeben

- 100: Verfahren

## Patentansprüche

1. Computerimplementiertes Verfahren (100) zur automatischen Herstellung einer Verkaufsanzeige für ein Produkt, mit den folgenden Schritten:
- elektronisches Abrufen (1) und Erfassen (2) zumindest von ein Produkt aus einer Liste von Produkten betreffenden Herstellerdaten, welche über eine online-Plattform von einem Hersteller des Produkts bereitgestellt werden,
- Generieren und/oder Anpassen (5) zumindest eines Anzeigentextes und Anordnen von elektronischen Bildern und/oder Fotos durch Analyse der erfassten Produktdaten und/oder Produktbilder mittels eines maschinellen Lernmodells unter Verwenden der abgerufenen Herstellerdaten und insbesondere in Abhängigkeit einer vordefinierten Anordnung von Informations- und Eigenschaftsfeldern zu einer Produktverkaufsanzeige.

2. Computerimplementiertes Verfahren (100) nach Anspruch 1, **dadurch gekennzeichnet, dass** nach dem Abrufen (1) und Erfassen (2) der Herstellerdaten ein Identifizieren (3a) von zusammengehörenden Produktdaten und Produktinformationen eines gleichen Produkts durch Analyse der erfassten Produktdaten mittels des maschinellen Lernmodells erfolgt.

3. Computerimplementiertes Verfahren (100) nach einem der Ansprüche 1 oder 2, **dadurch gekennzeichnet, dass** das elektronische Abrufen (1) und Erfassen (2) von Herstellerdaten mittels eines maschinellen Lernmodells voll- oder teilautomatisch erfolgt, insbesondere in einem regelmäßigen Intervall, insbesondere in einem Intervall welches durch Analyse von vergangenen Zeitpunkten für Produktneuerungen mittels eines maschinellen Lernmodells generiert ist.

4. Computerimplementiertes Verfahren (100) nach einem der voranstehenden Ansprüche, **dadurch gekennzeichnet, dass** bei dem elektronischen Abrufen (1) und Erfassen (2) von Herstellerdaten zusätzlich auch Veränderungen oder Neueinstellungen von Herstellerdaten durch Analyse der zur Verfügung gestellten Produktinformationen erfasst werden.

5. Computerimplementiertes Verfahren (100) nach einem der voranstehenden Ansprüche, **dadurch gekennzeichnet, dass** die Herstellerdaten technische Informationen, einen Beschreibungstext, Zeichnungen und/oder Fotos des Produkts umfassen.

6. Computerimplementiertes Verfahren (100) nach einem der voranstehenden Ansprüche, **dadurch gekennzeichnet, dass** das Generieren und/oder Anpassen (5) der Produktverkaufsanzeige, insbesondere des Anzeigentextes und Anordnen von elektronischen Bildern und/oder Fotos, mit oder zeitlich nach einem Anwählen der betreffenden, die Produktverkaufsanzeige enthaltenden Online-Webseite erfolgt.

7. Computerimplementiertes Verfahren (100) nach Anspruch 6, **dadurch gekennzeichnet, dass** zusätzlich das elektronische Abrufen (1) der Herstellerdaten des Produkts zeitlich mit oder nach dem Anwählen (1b) der betreffenden, die Produktverkaufsanzeige enthaltenden Online-Webseite erfolgt.

8. Computerimplementiertes Verfahren (100) nach einem der voranstehenden Ansprüche, **dadurch gekennzeichnet, dass** das Generieren und/oder Anpassen (5) der Produktverkaufsanzeige, insbesondere des Anzeigentextes und Anordnen von elektronischen Bildern und/oder Fotos, in Abhängigkeit von individuellen, insbesondere persönlichen Einstellungen und Präferenzen (4b) des die Produktverkaufsanzeige aufrufenden Benutzers erfolgt.

9. Computerimplementiertes Verfahren (100) nach Anspruch 8, **dadurch gekennzeichnet, dass** die individuellen, insbesondere persönlichen Einstellungen und Präferenzen (4b) des die Produktverkaufsanzeige aufrufenden Benutzers zuvor gesammelt und gespeichert (4a) werden.

10. Computerimplementiertes Verfahren (100) nach einem der Ansprüche 8 oder 9, **dadurch gekennzeichnet, dass** die persönlichen Einstellungen und Präferenzen (4b) des Benutzers anhand von zuvor von dem Benutzer besuchten Webseiten erfassbar sind, und zumindest das vermutete Geschlecht, das vermutete Alter und/oder eine vom Benutzer vermutlich präferierte Farbe umfassen.

11. Computerimplementiertes Verfahren (100) nach einem der voranstehenden Ansprüche, **dadurch gekennzeichnet, dass** das elektronische Abrufen (1) der Herstellerdaten automatisch, insbesondere regelmäßig, erfolgt.

12. Computerimplementiertes Verfahren (100) nach einem der voranstehenden Ansprüche, **dadurch gekennzeichnet, dass** das elektronische Abrufen (1) der Herstellerdaten in Abhängigkeit mindestens einer Webseite eines Drittanbieters erfolgt, insbesondere wenn dasselbe Produkt bei der Webseite eines Drittanbieters abrufbar ist und dies von der künstlichen Intelligenz erkannt wird.

13. Computerimplementiertes Verfahren (100) nach einem der voranstehenden Ansprüche, **dadurch gekennzeichnet, dass** vor dem Generieren und/oder Anpassen (5) der Produktverkaufsanzeige ein Erfassen (3b) von Produkteigenschaften anhand von Zeichnungen, Abbildungen und/oder Fotos des Produkts erfolgt, insbesondere ein Erfassen mindestens einer Farbe des Produktes, und die erfasste Information für ein Zuordnen in ein vordefiniertes Informations- oder Eigenschaftsfeld zumindest zwischengespeichert wird.

14. Vorrichtung zur Datenverarbeitung, umfassend Mittel zur Ausführung des Verfahrens mit den Merkmalen nach einem der Ansprüche 1 bis 13.

15. Computerprogrammprodukt, umfassend Befehle, die bei der Ausführung des Programms durch einen Computer diesen veranlassen, das Verfahren mit den Merkmalen nach einem der Ansprüche 1 bis 13 auszuführen.
